# EUROPÄISCHE PATENTANMELDUNG

(11) **EP 1 060 865 A2**
(43) Veröffentlichungstag der Anmeldung: **20.12.2000**
(21) Anmeldenummer: 00106773.5
(22) Anmeldetag: 30.03.2000
(51) Int. Cl.: B29C 49/56

(54) **Verfahren und Vorrichtung zum Schliessen und Öffnen der Formwerkzeuge einer Kunststoffverarbeitungsmaschine**

(30) Priorität: 15.06.1999 DE 19927138
(71) Anmelder: Fischer-W. Müller Blasformtechnik GmbH, 53842 Troisdorf (DE)
(72) Erfinder: Maier, Rudolf, 53797 Lohmar (DE)
(74) Vertreter: Valentin, Ekkehard, Dipl.-Ing.

(57) **Zusammenfassung**

Um bei einem Verfahren zum Schließen und Öffnen der Werkzeuge (2, 3) einer Zweistationen-Kunststoffverarbeitungsmaschine, insbesondere einer Blasformmaschine, wobei die Werkzeuge (2, 3) in den beiden Stationen jeweils zwei Blasformhälften (7, 8, 9, 10) mit Formaufspannplatten (11, 12, 13, 14) umfassen und die äußeren Blasformhälften (8, 9) mittels Antriebsmitteln (20, 21), die mit Jochen (15, 17) der äußeren Formaufspannplatten (11, 14) in Wirkverbindung stehen, horizontal verschoben werden, eine Bewegung der Blasformhälften der Werkzeuge zwischen einer Offenstellung zur Aufnahme eines schlauchförmigen Vorformling und Schließposition bzw. Blasposition einfach und variabel zu bewerkstelligen, sollen die inneren Formaufspannplatten (12, 13) mittels eines Schlittens (18) verfahren werden, mit dem sie über ein Haltemittel (16) fest verbunden sind, während die Joche (15, 17) der äußeren Formaufspannplatten (11, 14) relativ zu dem Schlitten verfahren werden.

## Beschreibung

Die Erfindung betrifft ein Verfahren und eine Vorrichtung zum Schließen und Öffnen der Formwerkzeuge einer Zweistationen-Kunststoffverarbeitungsmaschine, insbesondere einer Blasformmaschine, wobei die Werkzeuge in den beiden Stationen jeweils zwei Blasformhälften mit Formaufspannplatten umfassen und die äußeren Blasformhälften mittels Antriebsmitteln, die mit Jochen der äußeren Formaufspannplatten in Wirkverbindung stehen, horizontal verschoben werden und dabei die Blasformhälften aus einer Offenstellung zur Aufnahme eines schlauchförmigen Vorformlings unterhalb eines Extrusionskopfes in eine Schließposition bewegt werden.

Aus der DE 197 47 698 A1 ist eine Blasformmaschine mit holmenlosem Grundrahmen zur Herstellung blasgeformter Kunststoffhohlkörper bekannt, bei der die Blasformhälften zur Aufnahme des schlauchförmigen Vorformlings mittels einer Transportvorrichtung horizontal verschiebbar sind, wobei diese an die Formaufspannplatten bzw. an die zugeordneten, die Formaufspannplatten tragenden Lagerböcke angreift. Hierbei umfaßt die Transportvorrichtung zwei separate Antriebsaggregate, wobei jede äußere Formaufspannplatte mit einem dieser Antriebsaggregate ausgestattet ist. Bei der Ausführungsform einer Zweistationen-Maschine ist neben zwei äußeren Formaufspannplatten eine gemeinsame mittlere Formaufspannplatte vorgesehen, die zu beiden Stationen gehört, wobei auf beiden Seiten jeweils eine Blasformhälfte aufgespannt ist. Durch Einfluß der beiden selbständig angetriebenen äußeren Formaufspannplatten bzw. deren Lagerböcke wird diese mittlere Formaufspannplatte ohne eigenen Antrieb frei auf dem Grundrahmen verschoben.

Von einem derartigen Stand der Technik ausgehend liegt der Erfindung die Aufgabe zugrunde, eine Verfahren und eine Vorrichtung der eingangs genannten Art zu schaffen, wobei eine Bewegung der Blasformhälften der Werkzeuge zwischen einer Offenstellung zur Aufnahme eines schlauchförmigen Vorformlings und einer Schließposition bzw. Blasposition einfach und variabel zu bewerkstelligen ist.

Diese Aufgabe wird mittels des Verfahrens mit den Merkmalen des Anspruchs 1 und der Vorrichtung mit den Merkmalen des Anspruch 4 gelöst. Vorteilhafte Ausgestaltungen sind in den Unteransprüchen offenbart.

Der Grundgedanke der Erfindung liegt darin, daß die inneren Formaufspannplatten der Blasformhälften der beiden Werkzeuge mit einem getrennten und vorzugsweise gemeinsamen Haltemittel fest auf einem Schlitten angeordnet sind. Die Blasformhälften sind zueinander diametral angeordnet. Dieser Schlitten ist längs der Schlauchaufnahmeposition auf Führungen horizontal bewegbar. Die äußeren Formaufspannplatten sind hingegen selbständig relativ zum Schlitten verfahrbar, hierzu sind sie vorzugsweise mit separaten Antriebsmitteln versehen. So können die Werkzeuge auf einfache Weise und variabel zwischen einer Offenstellung und einer Schließstellung unterhalb der Schlauchaufnahmestation, einer Blasstation oder Warteposition und einer Zurückbewegung in die Schlauchaufnahmeposition, die auch gleichzeitig Schlauchentnahmeposition ist, verfahren werden.

Durch die vorgeschlagene Lösung wird erreicht, daß sowohl die äußeren als auch die inneren Blasformhälften der Werkzeuge unabhängig voneinander bewegt werden können. Der Schlitten dient zur Bewegung der inneren Blasformhälften sowie vorteilhafterweise zum Verfahren des geschlossenen Werkzeugs über größere Strecken zwischen Schlauchaufnahmeposition oder Blasstation oder Wartestation, während mittels der selbständig verschiebbaren äußeren Formaufspannplatten bzw. äußeren Blasformhälften ein schnelles Öffnen und Schließen des jeweiligen Werkzeugs unterhalb der Schlauchaufnahmestation gewährleistet wird.

Um ein unterhalb der Schlauchaufnahmestation geöffnetes erstes Werkzeug der Zweistationenmaschine nach Aufnahme eines Kunststoffvorformlings in eine Schließstellung zu bringen, wird vorgeschlagen, den Schlitten um den Betrag vorzugsweise eines halben Öffnungsweges zu verschieben, so daß die entsprechende innere Blasformhälfte in Schließposition gebracht wird. Anschließend wird die entsprechende äußere Formaufspannplatte der äußeren Blasformhälfte in entgegengesetzter Richtung um den Betrag des ganzen Öffnungsweges verfahren, um das Werkzeug zu verschließen. Nach einer weiteren vorteilhaften Ausführungsform werden der Schlitten und somit die innere Blasformhälfte und die entsprechende äußere Blasformhälfte relativ zueinander in entgegengesetzte Richtung zum Verschließen des Werkzeuges bewegt, entweder gleichzeitig mit unterschiedlichen Geschwindigkeiten oder mit gleicher Geschwindigkeit mit längerer Zeitdauer der Bewegung der äußeren Blasformhälfte. Insgesamt wird durch diese Ausführungsform der Bewegungsabläufe eine Beschleunigung des Schließvorgangs erreicht.

Nach Verschließen des Werkzeugs wird dieses zusammen mit dem Kunststoffvorformling durch Verfahren des Schlittens in Richtung Blasstation bewegt. Durch diese Schlittenbewegung wird gleichzeitig das zweite benachbarte Werkzeug in die Schlauchaufnahmestation verfahren. Zum Öffnen des zweiten Werkzeuges wird der Schlitten wiederum vorzugsweise um den Betrag eines halben Öffnungsweges und das entsprechende Joch der äußeren Formaufspannplatte vorzugsweise um den Betrag eines ganzen Öffnungsweges in entgegengesetzte Richtung verfahren. Wegen der Beschleunigung der Vorgänge sind Relativbewegungen der Schlittenbewegung zu der Bewegung des Jochs der äußeren Formaufspannplatte vorteilhaft.

In der Schlauchaufnahmestation wird ein Kunststoffvorformling in das geöffnete Werkzeug abgesenkt und das untere Ende des Schlauches auf einer Blasdornvorrichtung abgesenkt und gespreizt gehalten. Anschließend werden die Blasformhälften nach dem oben beschriebenen Verfahren zusammengefahren und geschlossen. Um zu gewährleisten, daß die jeweilige Blasdornvorrichtung stets unterhalb des Vorformlings plaziert ist, wird die Blasdornvorrichtung synchron entgegen der Schlittenbewegung auf dem Schlittenrahmen verfahren. Dies wird vorzugsweise dadurch erreicht, indem die Antriebsmittel für die äußeren Formaufspannplatten ebenfalls in Wirkverbindung mit den unterhalb jedes Werkzeuges angeordneten Blasdornvorrichtungen stehen. Dabei werden bei einer bevorzugten Ausführungsform sowohl die Blasdornvorrichtungen als auch die jeweiligen äußeren Formaufspannplatten mittels eines gemeinsamen Antriebsmittels angetrieben.

Nach einer bevorzugten Ausführungsform ist hierzu ein Motor direkt oder mit einem Getriebe über eine Gewindespindel verbunden, die in axialer Verlängerung sowohl eine Mutter für die Blasdornvorrichtung als auch für die jeweilige äußere Formaufspannplatte aufweist. Die unterschiedlichen Wege, die die Blasdornvorrichtung sowie die äußere Formaufspannplatte verschoben werden müssen, können durch unterschiedliche Steigungen der Spindel erreicht werden.

Der Schlitten weist vorzugsweise ein separates Antriebsaggregat in Form eines Motors auf. Bei den Motoren kann es sich um jede beliebige Art handeln, beispielsweise hydraulisch oder pneumatisch oder elektrisch angetriebene Motoren. Der Schlittenmotor treibt ebenfalls eine Spindel an, die mit einer feststehenden Mutter in Wirkverbindung steht zur Erzeugung der Linearbewegung des Schlittens. Der Schlitten muß zwischen der Offenstellung und der geschlossenen Stellung vorzugsweise nur die Hälfte der Strecke im Vergleich zu der entsprechenden äußeren Formaufspannplatte zurücklegen. Dies wird erreicht durch entsprechend unterschiedliche Steigungen der Spindeln bei gleichen Motorumdrehungen. Alternativ ist das Verfahren über unterschiedlich große Wegstrecken ebenso durch angepaßte Motordrehzahlen möglich. Neben den vorteilhaften Antriebsspindeln sind jegliche andere Arten von bekannten Getrieben denkbar, beispielsweise ein Zahnritzel, was durch seinen kämmenden Eingriff mit einer Zahnstange eine Linearbewegung bewerkstelligt.

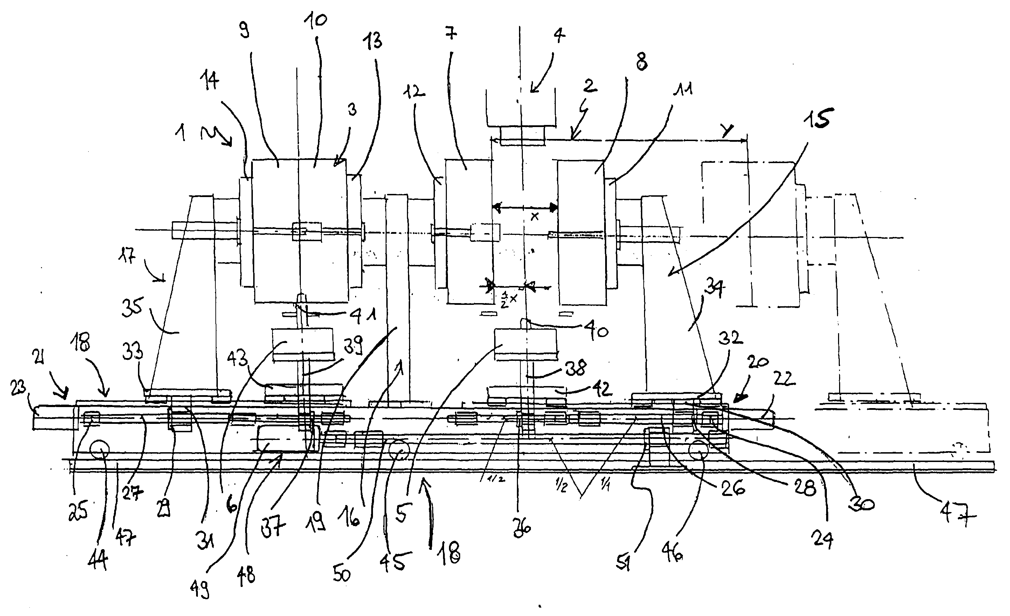

Weitere Einzelheiten und Vorteile der Erfindung ergeben sich aus den Ansprüchen und der nachfolgenden Beschreibung: Hierbei zeigt die einzige Figur eine Zweistationen-Blasformmaschine in Seitenansicht.

In der einzigen Figur ist eine Zweistationen-Blasformmaschine mit einer Schließeinheit 1 für die Formen zweier Werkzeuge 2, 3, mit einem einen Vorformlingsschlauch bereitstellenden Extrusionskopf 4 und zwei unterhalb der Werkzeuge angeordneten Blasdornvorrichtungen 5, 6 dargestellt. Das erste Werkzeug 2 umfaßt die beiden Blasformhälften 7, 8, das zweite Werkzeug 3 die beiden Blasformhälften 9, 10. Die Blasformhälften 7, 8, 9 und 10 sind lösbar an Formaufspannplatten 11 bis 14 befestigt. Jede Formaufspannplatte ist mit einem Joch 15, 17 bzw. mit einem Haltemittel 16 verbunden. Hierbei sind die Joche 15 und 17 der äußeren Formaufspannplatten auf dem Rahmen eines Schlittens 18 horizontal verfahrbar, während die inneren Formaufspannplatten 12, 13 über eine fest auf dem Schlittenrahmen 18 angeordnete Säule 19 mit diesem verbunden sind.

Die Joche 15 bzw. 17 der beiden äußeren Formaufspannplatten 11 bzw. 14 sind mit separaten Antriebsmitteln 20 bzw. 21 versehen. Hierzu ist jeweils eine durch einen Motor 22 bzw. 23 angetriebene und in Lagern 24 bzw. 25 angeordnete Spindel 26 bzw. 27 vorgesehen, die in einer Mutter 28 bzw. 29 läuft, die von einem Tragarm 30 bzw. 31 aufgenommen wird. Der Tragarm 30 bzw. 31 greift an ein Führungselement 32 bzw. 33 an, auf das ein Haltearm 34 bzw. 35 des Joches 15 bzw. 17 aufgesetzt ist.

In axialer Verlängerung der beiden Antriebsspindeln 26, 27 sind zwei weitere Muttern 36, 37 vorgesehen. Diese Muttern 36, 37 werden von einem Halteelement 38, 39 für den Blasdorn 40, 41 aufgenommen. Um Verkantungen bei der Bewegung entlang des Schlittenrahmens zu vermeiden, weist jede Blasdornvorrichtung 5, 6 ebenfalls ein Führungselement 42, 43 auf. Für die Blasfunktion ist der jeweilige Blasdorn 40, 41 vertikal in Richtung Werkzeuginneres verfahrbar.

Der Schlitten 18 ist horizontal mittels Rollen 44 bis 46 auf Führungsschienen 47 längs des Extrusionskopfes 4 verfahrbar. Der Schlitten 18 weist ein selbständiges Antriebsaggregat 48 in Form einer durch einen Motor 49 angetriebenen Spindel 50 auf, die in Wirkverbindung mit einer fest verankerten Mutter 51 steht und die Rotation der Spindel 50 in eine Längsbewegung des Schlittenrahmens umwandelt.

In der einzigen Figur ist ein erstes Stadium mit geöffnetem ersten Werkzeug 2 und geschlossenem Werkzeug 3 dargestellt sowie ein zweites Stadium mit geschlossenem und verfahrenem ersten Werkzeug 2, hier in der Endposition strichpunktiert gekennzeichnet.

In dem ersten Stadium wird in ein geöffnetes erstes Werkzeug 2, das sich unterhalb des Extrusionskopfes 4 befindet, ein Vorformling (nicht gezeigt) eingeführt, der auf dem Dorn 40 der Blasdornvorrichtung 5 plaziert wird. Anschließend wird das Werkzeug 2 geschlossen, indem der Schlitten 18 und damit die fest plazierte innere Formaufspannplatte 12 bzw. innere Blasformhälfte 7 bei dieser Ausführungsform um einen halben Öffnungsweg ½ x verfahren wird. Zur Kompensation des Schlittenweges wird die äußere Formaufspannplatte 11 anschließend um den ganzen Öffnungsweg x in entgegengesetzte Richtung relativ zum Schlitten bzw. die Blasdornvorrichtung 5 um den halben Öffnungsweg bewegt. Diese unterschiedlichen Wegstrecken werden durch entsprechende Steigungen und Drehzahlen der Antriebsspindel 50 des Schlittens 18 und der Antriebsspindel 26 der äußeren Formaufspannplatte 11 erreicht, wobei die Steigung der Spindel der äußeren Formaufspannplatte 11 um das doppelte größer ist als die Steigung der Antriebsspindel des Schlittens bzw. die des Antriebsspindelbereichs der Blasdornvorrichtung. Neben diesen nacheinander ablaufenden Bewegungsvorgängen ist es auch vorteilhaft, wenn die Bewegungen nicht nacheinander, sondern gleichzeitig ablaufen, um den Vorgang insgesamt zu beschleunigen.

Im geschlossenen Zustand wird das erste Werkzeug 2 aus der Schlauchaufnahmeposition durch Verfahren des Schlittens 18 in eine Blasstation oder Warteposition gebracht. Der maximale Transportweg ist mit y bezeichnet. Das zweite Werkzeug 3 wird gleichzeitig in die Schlauchaufnahmestation gefahren, die gleichzeitig die Artikelentnahmestation ist. Durch Verfahren der zweiten äußeren Formaufspannplatte 14 wird das Werkzeug 3 geöffnet und das fertige Kunststoffteil kann entnommen werden.

## Patentansprüche

1. Verfahren zum Schließen und Öffnen der Formwerkzeuge (2, 3) einer Zweistationen-Kunststoffverarbeitungsmaschine, insbesondere einer Blasformmaschine, wobei die Werkzeuge (2, 3) in den beiden Stationen jeweils zwei Blasformhälften (7, 8, 9, 10) mit Formaufspannplatten (11, 12, 13, 14) umfassen und die äußeren Blasformhälften (8, 9) mittels Antriebsmitteln (20, 21), die mit Jochen (15, 17) der äußeren Formaufspannplatten (11, 14) in Wirkverbindung stehen, horizontal verschoben werden und dabei die Blasformhälften (7, 8, 9, 10) aus einer Offenstellung zur Aufnahme eines schlauchförmigen Vorformlings unterhalb eines Extrusionskopfes (4) in eine Schließposition bewegt werden,
dadurch gekennzeichnet,
daß die inneren Formaufspannplatten (12, 13) mittels eines Schlittens (18) verfahren werden, mit dem sie über ein Haltemittel (16) fest verbunden sind, während die Joche (15, 17) der äußeren Formaufspannplatten (11, 14) relativ zu dem Schlitten verfahren werden.

2. Verfahren nach Anspruch 1,
dadurch gekennzeichnet,
daß ein Werkzeug (2, 3) aus einer geöffneten Position unterhalb des Extrusionskopfes (4) nach Aufnahme des Vorformlings in eine geschlossene Position durch Verschieben des Schlittens (18) um den Betrag eines halben Öffnungsweges und Verschieben des Joches (15, 17) der entsprechenden äußeren Formaufspannplatte (11, 14) des Werkzeugs in entgegengesetzter Richtung um den Betrag des ganzen Öffnungsweges verfahren wird.

3. Verfahren nach Anspruch 1,
dadurch gekennzeichnet,
daß eine Blasdornvorrichtung (5, 6) unterhalb des Werkzeugs (2, 3) so verschiebbar ist, daß sie sich stets unterhalb des Vorformlings befindet.

4. Vorrichtung zur Durchführung des Verfahrens nach den Ansprüchen 1 bis 3
mit
einer Schließeinheit (1) für zwei sich jeweils aus zwei Blasformhälften (7, 8, 9, 10) zusammensetzende Werkzeuge (2, 3) zur Aufnahme eines schlauchförmigen Vorformlings, wobei die Blasformhälften mit Formaufspannplatten (11, 12, 13, 14) versehen sind und die äußeren Blasformhälften mittels Antriebsmitteln (21, 22), die mit Jochen (15, 17) der äußeren Formaufspannplatten (11, 14) in Wirkverbindung stehen, horizontal verschiebbar sind,
einen Vorformlingsschlauch bereitstellenden Extrusionskopf (4) und mindestens einer unterhalb des Extrusionskopfes anzuordnender Blasdornvorrichtung (5, 6),
dadurch gekennzeichnet,
daß die Schließeinheit (1) auf einem Schlitten (18) angeordnet ist, der auf Linearführungen (47) läuft, sowie Antriebsmittel (48) aufweist,
daß auf diesem Schlitten ein Haltemittel (16) für die inneren, zueinander diametralen Formaufspannplatten (12, 13) fest angeordnet ist und daß der Schlitten (18) sowie die die äußeren Formaufspannplatten tragenden Joche (15, 17) relativ zueinander verfahrbar sind zur Einstellung einer Offenstellung und einer Schließposition des jeweiligen Werkzeugs jeweils unterhalb des Extrusionskopfes.

5. Vorrichtung nach Anspruch 4,
dadurch gekennzeichnet,
daß der Schlitten (18) und die Joche (15, 17) der äußeren Formaufspannplatten (11, 14) gemeinsame oder separate Antriebsmittel (21, 22, 48) aufweisen.

6. Vorrichtung nach Anspruch 4 und 5,
dadurch gekennzeichnet,
daß das Antriebsmittel (48) des Schlittens (18) einen Motor (49) umfaßt, der ein Gewindespindel (50) in Rotation versetzt und daß die Gewindespindel mit einer stationären Mutter (51) in Wirkverbindung steht, so daß der Schlitten längs der Führung (47) verfahrbar ist.

7. Vorrichtung nach Anspruch 4 und 5,
dadurch gekennzeichnet,
daß für die Bewegung der Joche (15, 17) der äußeren Formaufspannplatten (11, 14) jeweils ein unabhängig arbeitender Motor (22, 23) über eine rotierende Gewindespindel (26, 27) mit einer Mutter (28, 29) so in Wirkverbindung steht, daß über die Joche die Halteplatten der äußeren Formaufspannplatten horizontal verschiebbar sind.

8. Vorrichtung nach Anspruch 7,
dadurch gekennzeichnet,
daß die Gewindespindeln (26, 27) zusätzlich mit einer Mutter (36, 37) der Blasdornvorrichtungen (5, 6) in Wirkverbindung stehen, die so verschoben werden, daß sie stets unterhalb des Vorformlings plaziert sind.

9. Vorrichtung nach einem der Ansprüche 6 bis 8,
dadurch gekennzeichnet,
daß die Steigung der Spindel in dem Wirkbereich der Muttern (28, 29) für die Formaufspannplatten doppelt so groß ist im Vergleich zu dem Spindelabschnitt, an dem die Muttern (36, 37) für die Blasdornvorrichtung angreifen.

10. Vorrichtung nach einem der Ansprüche 4 bis 9,
dadurch gekennzeichnet,
daß Führungsmittel (32, 33) an den Jochen der Formaufspannplatten bzw. der Blasdornvorrichtungen entlang des oberen Schlittenrahmens zur Verhinderung von Verkantungen vorgesehen sind.
